# EUROPEAN PATENT SPECIFICATION

(11) **EP 1 582 384 B1**
(45) Date of publication and mention of the grant of the patent: **27.02.2008**
(21) Application number: 05005323.0
(22) Date of filing: 11.03.2005
(51) Int. Cl.: B60H 1/00

(54) **Air treatment system housing**
Gehäuse einer Klimaanlage
Boîtier d'un dispositif de climatisation

(30) Priority: 29.03.2004 DE 102004015270
(43) Date of publication of application: 05.10.2005
(73) Proprietor: Valeo Klimasysteme GmbH, 96476 Bad Rodach (DE)
(72) Inventor: Krempel, Günter, 96476 Bad Rodach (DE); Wachter, Clemens, 96342 Stockheim (DE)
(74) Representative: Léveillé, Christophe

(56) References cited:
- DE-A1- 10 042 683
- US-A- 5 954 578
- US-A- 6 029 469

## Description

The present invention relates, in general terms, to air treatment system housing structures, such as, for example, a housing structure for a motor vehicle heating ventilation and/or air conditioning system.

An air treatment system housing and, in particular, a housing for a vehicle air conditioning system are conventionally constructed from a multiplicity of separate housing parts which are then mounted separately in the vehicle and, during mounting, are brought reciprocally into engagement with one another in an airtight manner. Conventionally, for this purpose, a fan housing is provided, to which an air filter housing is attached, after which, conventionally, the actual air conditioning housing is provided, in which appropriate receptacles are formed for heat exchangers, such as, for example, the heating body and the evaporator of an air conditioning system refrigerating circuit. This last-mentioned housing also conventionally has arranged in it the corresponding actuation elements, such as air and mixing flaps. Depending on the application, these individual modules or units are preassembled in order to be introduced into the vehicle or, alternatively, are only combined during mounting in the vehicle. However, this modular provision has various disadvantages, particularly with regard to the large number of plastic parts, the large number of interfaces which may lead to corresponding leakages, and resulting high tolerances in terms of final mounting. Furthermore, a corresponding modular concept has the disadvantage that correspondingly high mounting costs are incurred.

The object of the present invention is, therefore, to provide an air treatment system housing structure which can counteract the abovementioned disadvantages. The air treatment system housing structure should be capable of being produced simply and cost-effectively and have sufficient structural intactness and make it possible to have a reduced number of parts and a reduced outlay in mounting terms.

The abovementioned object is achieved, according to the invention, by means of an air treatment system housing structure having the features of claim 1, preferred embodiments being the subject matter of the dependent claims.

US 6 029 469 discloses an air treatment system according to the preamble of claim 1.

In particular, the present invention accordingly proposes an air treatment system housing structure comprising at least two sections which are connected to one another in one piece and serve in each case for the reception of components belonging to different functional groups of the air treatment system and between which an air path is formed, at least two adjacent sections having, in addition to an issue or opening common to them, in each case at least one further issue or opening, the issue normal vectors of which are essentially oppositely parallel. It was found, extremely surprisingly, that it is possible to provide an air treatment system housing structure with a reduced number of parts which may comprise different sections for the purpose of the reception of different components of the air treatment system, such as, for example, a section for receiving the blower, a section for receiving an air filter device and a section for receiving the thermodynamic components of a heating air conditioning system.

Since the individual sections are produced in one piece, leakages can be effectively prevented, and the entire part can be cost-effectively produced and also mounted, with lower tolerances being adhered to. Moreover, due to the provision of further issue regions lying in different planes, high structural intactness can be achieved, so that the structure thus constructed from different sections has sufficient distortion resistance. Furthermore, owing to the essentially oppositely parallel issue normal vectors, a corresponding maintenance requirement of the components to be received can be taken into account.

It should be noted that, although it is also possible to provide a misorientation of the issue normal vectors in each case between adjacent sections, it is likewise possible, in specific applications, to provide appropriately oriented issue regions for individual adjacent sections, in an air treatment system housing structure according to the invention, for issue normal vectors of at least two adjacent sections to be essentially parallel to one another.

According to the invention, the issue normal vectors of at least two adjacent sections are essentially oppositely parallel. Such a configuration can be produced particularly simply, for example, by the injection molding method by means of an individual two-part injection molding die, the molding parts of which are displaceable according to the issue normal vectors.

Additionally, it is possible for the issue normal vectors of common and further issues of at least two adjacent sections to run essentially perpendicularly to one another. In such a configuration, in particular, the structural intactness of the air treatment system housing structure formed is high, and, depending on the vehicle geometry, this can also make it possible in a simple way to have corresponding access, required for maintenance purposes, after mounting. By means of such a configuration, it is possible, for example, for the further issues to extend, for example, essentially helically around the entire housing structure if, for example, there is provision for the section serving for receiving the blower to issue upward and for the section serving for receiving the air filter to issue forward, while a section serving for the reception of thermodynamic elements of the air conditioning system issues downward. Although a misorientation of the issue normal vectors which is not at right angles is also possible, the perpendicular orientation has the advantage that a shaping die can be designed in a correspondingly simple way.

Advantageously, all the sections of the air treatment system housing structure have at least one common wall, as a result of which, for example, highly accurate mounting interfaces with regard to the body and/or high structural intactness can be provided.

According to a preferred embodiment, at least two adjacent sections comprise two common walls running essentially parallel. The term "parallel walls" is in this case to be understood in a broad interpretation, since it is possible, for example, to understand the said meaning that, essentially in the orientation mounted in the vehicle, the front wall of the housing structure is common to all the sections, and it is also possible for the rear wall of the structure, while the respective corresponding further issues are oriented upward or downward.

Furthermore, it is advantageous if at least two adjacent sections have two essentially perpendicular common walls. In this case, too, the term "essentially perpendicular" is to be interpreted broadly and is to be understood as meaning that two adjacent sections have a common angled wall structure, so that they have, for example, a common bottom wall and a common rear wall, while, for example, one section has a wider issue in the front region, while the other section has its wider issue oriented upward.

In a particularly preferred embodiment, the sections making up the structure in each case form a fan receptacle, an air filter receptacle and a heat exchanger receptacle, in particular arranged in this order.

The air treatment system housing structure according to the invention may be provided in such a way that the section forming the fan receptacle and the section forming the air filter receptacle have parallel issue normal vectors, while the section forming the heat exchanger receptacle has an in this respect oppositely parallel issue normal vector, in each case with respect to the further issues. In other words, a housing structure of this type corresponds essentially to two reception spaces which are located next to one another and are rotated through 180°.

Finally, it is preferable that, for the purpose of simple production by means of forming dies, such as, for example, injection molding dies, the air treatment system housing structure is designed in such a way that the further issues are forming die removal orifices, in which case it is particularly advantageous if the contiguous walls allow simple removal from the mold, in that the contiguous walls do not have any offsets which are not parallel to the respective issue normal vectors of the further issues.

In summary, the present invention thus makes it possible, in a complete departure from the practice customary hitherto, according to which individual modules are used for the housing structure, to provide a fundamental basic structure, so that tolerances existing between the separate modules can be eliminated. Owing to the misorientation of the issue normal vectors of the further issues of the individual sections, a sufficient structural intactness can be obtained in an extremely surprising and simple way, without the production method becoming excessively complex as a result, thus allowing a quite surprising saving of parts and assembly costs and also an increase in safety against leakage.

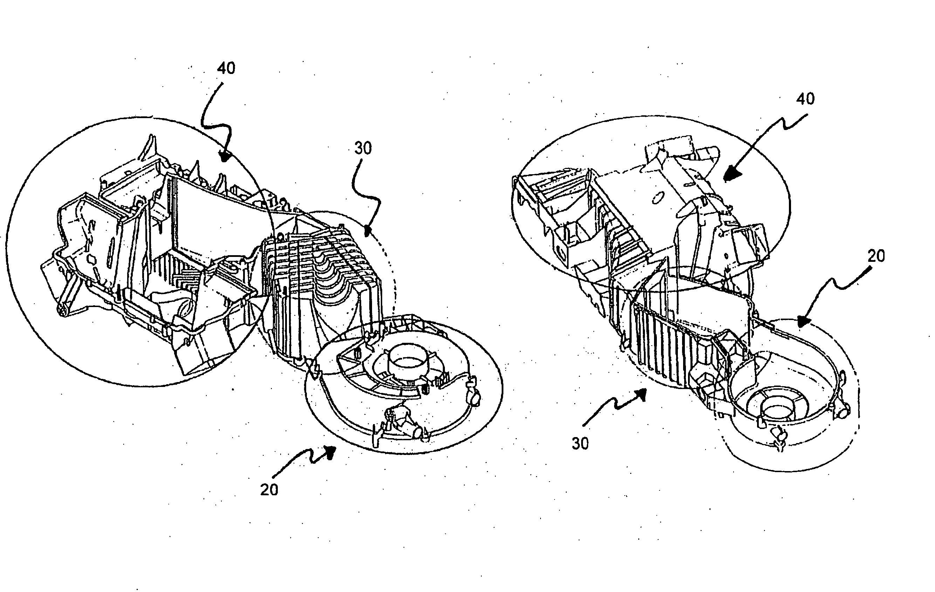

Moreover, further advantages and features of the present invention may be gathered from the following description, given merely by way of example, of a currently preferred embodiment, this description not being restrictive and referring to the accompanying drawing which illustrates a motor vehicle air conditioning system housing structure in perspective in two different views as a preferred embodiment of the present invention.

The illustrated housing structure of the preferred embodiment is formed essentially from a section 20 which serves for receiving a blower or fan, from a section 30 which is provided for receiving an air filter, in the present case an air filter to be arranged in a V-shaped manner, and a section 40 in which the various thermodynamic components, such as the air stream control and regulating elements, can be received. The entire housing structure is produced, as illustrated, in one piece, for example, by means of an injection molding method, and has a multiplicity of body-side fastening means which, owing to the provision of the housing structure in one piece, can have high accuracy, that is to say low tolerances.

As may gathered from the perspective illustrations, the sections 20 and 30 have in each case a common issue, by means of which they are reciprocally connected and define an air path, and a further issue region which is oriented downward in the illustration of the left side and is oriented upward in the illustration on the right side. In the embodiment illustrated here, the two issue regions lie on different planes, but the issue region normal vectors run parallel and codirectionally to one another.

In contrast to this, the section 40, which is connected to the section 30 adjacently to the latter via a common issue region, has a further issue region which is oriented upward in the illustration in the left portion of the single figure and is oriented downward in the illustration on the right side of the figure. In other words, the issue normal vector runs parallel to those of the sections 20 and 30, but in the opposite direction. It should be noted that, in the illustration on the left side of the figure, the front wall is partially cut away, although this does not constitute the further issue region.

The embodiment illustrated, with the respective issue regions in essentially parallel planes and with at least partially oppositely directed normal vectors, makes it possible, as becomes clear to a person skilled in the art from the drawing, to have effective and simple production by means of a very simple injection molding die, since it is sufficient to provide only a two-part mold, since all the housing wall sections are illustrated as being free of any offset.

Although the present invention was described above with full reference to a currently preferred embodiment, a person skilled in the art should recognize that the most diverse possible variations and modifications are possible within the scope of the claims. In particular, a person skilled in the art should recognize that the one-piece housing structure could also be configured in another way, where appropriate at the expense of a somewhat more complex production method. A considerable factor, ultimately, is that the housing structure is one-piece overall, structural intactness being achieved effectively and simply due to the misorientation of the issue normal vectors of the further issues.

## Claims

1. An air treatment system housing structure, comprising at least two sections (20, 30, 40) which are connected to one another in one piece and serve in each case for the reception of components belonging to different functional groups of the air treatment system and between which an air path is formed, at least two adjacent sections (20, 30; 30, 40) of said sections having, in addition to an issue common to them, in each case at least one further issue **characterized in that**, the issue normal vectors of said further issues are essentially oppositely parallel.

2. The air treatment system housing structure as claimed in claim 1, wherein the issue normal vectors of common and further issues of at least two adjacent sections run essentially perpendicularly to one another.

3. The air treatment system housing structure as claimed in one of the preceding claims, wherein all the sections (20, 30, 40) have at least one common wall.

4. The air treatment system housing structure as claimed in one of the preceding claims, wherein at least two adjacent sections (20, 30; 30, 40) have two common walls running essentially parallel.

5. The air treatment system housing structure as claimed in one of the preceding claims, wherein at least two adjacent sections (20, 30; 30, 40) have two essentially perpendicular common walls.

6. The air treatment system housing structure as claimed in one of the preceding claims, wherein the sections (20, 30, 40) form in each case a fan receptacle, an air filter receptacle and a heat exchanger receptacle, in particular arranged in this order.

7. The air treatment system housing structure as claimed in claim 6, wherein the section (20) forming the fan receptacle and the section (30) forming the air filter receptacle have parallel issue normal vectors, while the section (40) forming the heat exchanger receptacle has an in this respect oppositely parallel issue normal vector, in each case with respect to the further issues.

8. The air treatment system housing structure as claimed in one of the preceding claims, wherein the further issues are forming die removal orifices, in particular contiguously to walls which have no offsets non-parallel to the respective issue normal vectors of the further issues.

## Patentansprüche

1. Luftbehandlungsanlagengehäusestruktur, umfassend zumindest zwei, einstückig miteinander verbundene, jeweils zur Aufnahme von zu unterschiedlichen Funktionsgruppen der Luftbehandlungsanlage gehörenden Bauteilen dienende Abschnitte (20, 30, 40), zwischen denen ein Luftpfad ausgebildet ist, wobei zumindest zwei benachbarte Abschnitte (20, 30; 30, 40) neben einer ihnen gemeinsamen Mündung jeweils zumindest eine weitere Mündung aufweisen, bei welcher die Mündungsnormalenvektoren von zumindest zwei benachbarten Abschnitten im Wesentlichen gegenläufig parallel sind.

2. Luftbehandlungsanlagengehäusestruktur nach Anspruch 1, bei welcher die Mündungsnormalenvektoren von gemeinsame und weitere Mündung von zumindest zwei benachbarten Abschnitten im Wesentlichen senkrecht zueinander verlaufen.

3. Luftbehandlungsanlagengehäusestruktur nach einem der vorangegangenen Ansprüche, bei welcher sämtliche Abschnitte (20, 30, 40) zumindest eine gemeinsame Wandung aufweisen.

4. Luftbehandlungsanlagengehäusestxuktux nach einem der vorangegangenen Ansprüche, bei welcher zumindest zwei benachbarte Abschnitte (20, 30; 30, 40) zwei im Wesentlichen parallel verlaufende gemeinsame Wandungen aufweisen.

5. Luftbehandlungsanlagengehäusestruktur nach einem der vorangegangenen Ansprüche, bei welcher zumindest zwei benachbarte Abschnitte (20, 30; 30, 40) zwei im Wesentlichen senkrechte gemeinsame Wandungen aufweisen.

6. Luftbehandlungsanlagengehäusestzuktur nach einem der vorangegangenen Ansprüche, bei welcher die Abschnitte (20, 30, 40) jeweils eine Lüfteraufnahme, eine Luftfilteraufnahme und eine Wärmetauscheraufnahme ausbilden, insbesondere in dieser Reihenfolge angeordnet.

7. Luftbehandlungsanlagengehäusestruktur nach Anspruch 6, bei welcher der die Lüfteraufnahme bildende Abschnitt (20) und der die Luftfilteraufnahme bildende Abschnitt (30) über parallele Mündungsnormalenvektoren verfügen, während der die wärmetauscheraufnahme bildende Abschnitt (40) über einen diesbezüglich gegenläufig parallelen Mündungsnomalenvektro verfügt jeweils bezogen auf die weiteren Mündungen.

8. Luftbehandlungsanlagengehäusestruktur nach einem der vorangegangenen Ansprüche, bei welchem die weiteren Mündungen Formungswerkzeugentnahmeöffnugnen sind, insbesondere an Wandungen angrenzend, die keine zu den jeweiligen Mündungsnormalenvektoren der weiteren Mündungen nicht-parallelen Rücksprünge aufweisen.

## Revendications

1. Structure de boîtier de système de traitement de l'air, englobant au moins deux sections (20, 30, 40) qui sont raccordées l'une à l'autre en une pièce et servent dans chaque cas à la réception de composants appartenant à différents groupes fonctionnels du système de traitement de l'air et entre lesquelles un passage d'air est formé, au moins deux sections adjacentes (20, 30 ; 30, 40) desdites sections présentant, en plus d'une sortie commune à elles, dans chaque cas au moins une sortie supplémentaire, **caractérisée en ce que** les vecteurs normaux de sortie desdites sorties supplémentaires sont sensiblement parallèles de manière opposée.

2. Structure de boîtier de système de traitement de l'air selon la revendication 1, dans laquelle les vecteurs normaux de sortie des sorties commune et supplémentaire d'au moins deux sections adjacentes s'étendent de manière sensiblement perpendiculaire l'un à l'autre.

3. Structure de boîtier de système de traitement de l'air selon l'une quelconque des revendications précédentes, dans laquelle toutes les sections (20, 30, 40) présentent au moins une paroi commune.

4. Structure de boîtier de système de traitement de l'air selon l'une quelconque des revendications précédentes, dans laquelle au moins deux sections adjacentes (20, 30 ; 30, 40) présentent deux parois communes s'étendant de manière sensiblement parallèle.

5. Structure de boîtier de système de traitement de l'air selon l'une quelconque des revendications précédentes, dans laquelle au moins deux sections adjacentes (20, 30 ; 30, 40) présentent deux parois communes sensiblement perpendiculaires.

6. Structure de boîtier de système de traitement de l'air selon l'une quelconque des revendications précédentes, dans laquelle les sections (20, 30, 40) forment dans chaque cas un réceptacle de soufflante, un réceptacle de filtre à air et un réceptacle d'échangeur thermique, en particulier agencés dans cet ordre.

7. Structure de boîtier de système de traitement de l'air selon la revendication 6, dans laquelle la section (20) formant le réceptacle de soufflante et la section (30) formant le réceptacle de filtre à air présentent des vecteurs normaux de sortie parallèles, tandis que la section (40) formant le réceptacle d'échangeur thermique présente à cet égard un vecteur normal de sortie parallèle de manière opposée, dans chaque cas par rapport aux sorties supplémentaires.

8. Structure de boîtier de système de traitement de l'air selon l'une quelconque des revendications précédentes, dans laquelle les sorties supplémentaires forment des orifices de retrait de matrice, en particulier de manière contiguë aux parois qui ne présentent pas de décalages non parallèles aux vecteurs normaux de sortie respectifs des sorties supplémentaires.
